# EUROPÄISCHE PATENTSCHRIFT

(11) **EP 1 430 235 B1**
(45) Veröffentlichungstag und Bekanntmachung des Hinweises auf die Patenterteilung: **20.08.2008**
(21) Anmeldenummer: 02753006.2
(22) Anmeldetag: 10.07.2002
(51) Int. Cl.: F16D 65/21

(54) **ELEKTROMECHANISCHE BREMSE**
ELECTROMECHANICAL BRAKE
FREIN ELECTROMECANIQUE

(30) Priorität: 22.09.2001 DE 10146779
(43) Veröffentlichungstag der Anmeldung: 23.06.2004
(73) Patentinhaber: ROBERT BOSCH GMBH, 70442 Stuttgart (DE)
(72) Erfinder: SCHUMANN, Frank, 74357 Boennigheim (DE)
(86) Internationale Anmeldenummer: PCT/DE2002/002518
(87) Internationale Veröffentlichungsnummer: WO 2003/027528

(56) Entgegenhaltungen:
- WO-A-99/37010
- DE-A- 10 064 901
- DE-A- 19 831 838
- US-A- 4 793 447
- US-A- 4 850 457
- US-A- 5 928 083

## Beschreibung

### Stand der Technik:

Die Erfindung betrifft eine elektromechanische Bremse gemäß dem Oberbegriff des Anspruchs 1.

Derartige Bremsen sind bekannt aus der DE 198 31 838 A1 oder aus der DE 195 11 287 A1. Diese elektromechanischen Bremsen weisen jeweils einen Elektromotor und ein Rotatibns/Translations-Umsetzungsgetriebe auf, das mit dem Elektromotor rotierend antreibbar ist und das eine Rotationsbewegung des Elektromotors in eine Translationsbewegung umsetzt. Die bekannten Bremsen verwenden einen Kugelgewindetrieb bzw. einen Rollengewindetrieb, also eine Spindeltrieb als Rotations/Translations-Umsetzungsgetriebe. Es kommen allerdings grundsätzlich alle Arten von Rotations/Translations-Umsetzungsgetrieben in Betracht, einschließlich beispielsweise Exzentern oder Nocken, die eine Verdrehung in eine Verschiebung umsetzen,

Weiterhin weisen die bekannten Bremsen einen Reibbremsbelag auf, der zur Erzeugung einer Bremskraft mif dem jeweiligen Rotations/Translations-Umsetzungsgetriebe an einen drehbaren Bremskörper andrückbar ist. Da die Bremsen als Scheibenbremsen ausgebildet sind, ist der Bremskörper eine Bremsscheibe. Grundsätzlich kann die Bremse allerdings auch eine andere Bauart aufweisen, beispielsweise als Trommelbremse ausgebildet sein.

Kräfte, Momente und Verformungen, die beim Zuspannen auftreten, werden bei den bekannten Bremsen über das Rotations/Transtations-Umsetzungsgetriebe auf den Elektromotor und/oder, sofern vorhanden, auf ein zwischengeschaltetes Untersetzungsgetriebe übertragen. Dies führt zu Fluchtungsfehlern, erhöhtem Verschleiß, erhöhter Reibung und vermindertem Wirkungsgrad. Die angesprochenen Verformungen sind beispielsweise eine elastische Aufweitung eines Bremssattels und eines angeflanschten Motor-/Getriebegehäuses der Bremse.

Eine nicht schaltbare, ausgleichende Kupplung ist deshalb zwischen den Elektromotor und das Rotations/Translations-Umsetzungsgetriebe geschaltet und überträgt die Rotationsbewegung des Elektromotors auf das Rotations/Translations-Umsetzungsgetriebe. Die Kupplung verringert Drehmomentstöße, dämpft Drehschwingungen und gewährleistet eine spielfreie Drehmomentübertragung. Ferner lassen sich Fluchtungsfehler wie Radialversatz und Winkelfehler sowie Axialverschiebungen ausgleichen. Axialverschiebungen können beispielsweise auch beim Betrieb durch Temperaturdehnungen auftreten. Eine Kupplung mit Ausgleichswirkung lässt größere Fertigungs- und Montagetoleranzen zu.

Beim Stand der Technik überträgt ein Untersetzungsgetriebe die Rotationsbewegung des Elektromotors auf die Kupplung. Durch das Untersetzungsgetriebe wird ein Drehmoment des Elektromotors zum Zuspannen der Bremse erhöht. Als Untersätzungsgetriebe werden beim zitierten Stand der Technik Planetengetriebe verwendet. Planetengetriebe bauen besonders kompakt und lassen sich deshalb platzsparend in der Bremse unterbringen. Zudem ermöglichen Planetengetriebe eine hohe Untersetzung und damit eine große Momentenübersetzung.

### Vorteile der Erfindung

Die erfindungsgemäße elektromechanische Bremse mit den Merkmalen des Anspruchs 1 weist als Kupplung eine elastische Klauenkupplung auf. Diese Klauenkupplung bildet mit dem Planetengetriebe eine eigenständige Baugruppe, die in einem Gehäusedeckel untergebracht ist.

Eine Klauenkupplung ist relativ einfach axial zusammensteckbar und begünstigt damit einen modularen Aufbau der Bremse aus jeweils eigenständigen Baugruppen für das Getriebe und/öder den Elektromotor und /oder das Rotaions/Translations-Umsetzungsgetriebe. Eigenständig Baugruppen vereinfachen den Zusammenbau und die Wartung der Bremse, verringern durch ein. Baukastensystem die Lagerhaltungskosten indem beispielsweise ein Getriebe oder ein Elektromotor für verschiedene Bremsentypen verwendet werden. Weiterer Vorteil von Baugruppen ist deren separate Prüfbarkeit auf Funktionsfähigkeit vor dem Zusammenbau der Bremse.

Weitere Vorteile oder vorteilhafte Weiterbildungen der Erfindung ergeben sich aus den Unteransprüchen oder der nachfolgenden Beschreibung.

### Zeichnung

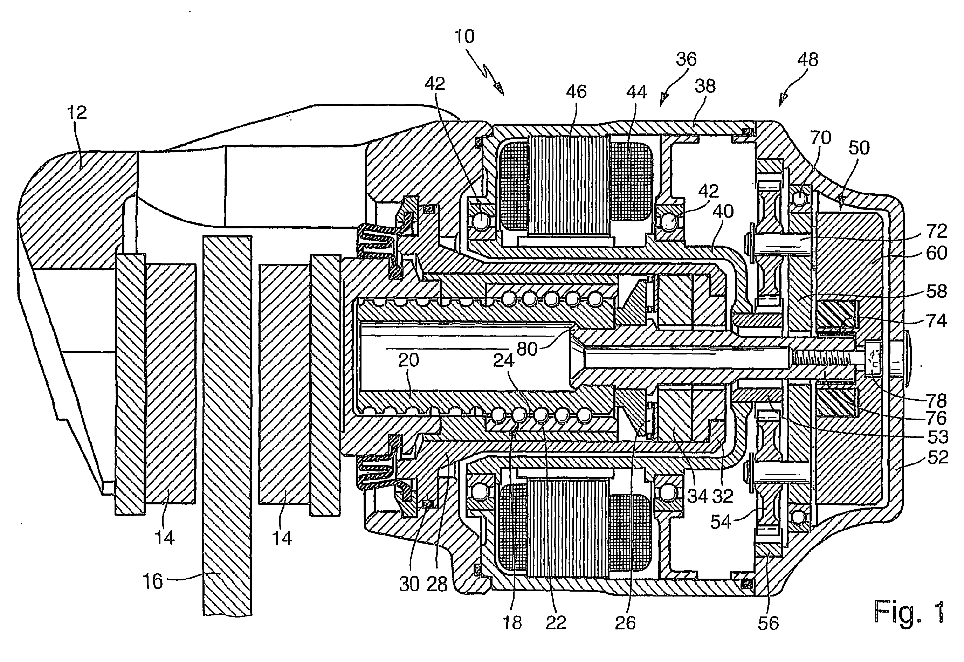

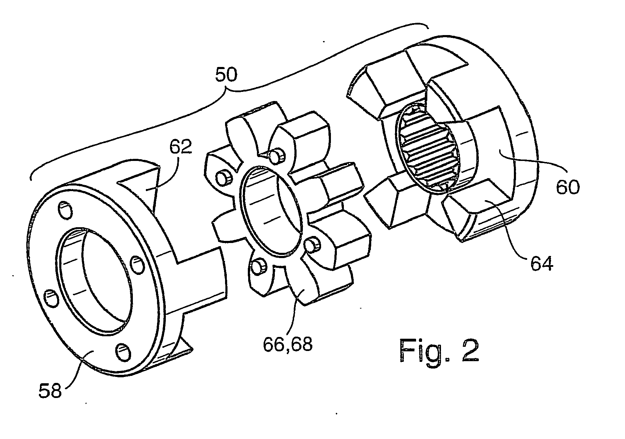

Die Erfindung wird nachfolgend anhand eines in der Zeichnung dargestellten Ausführungsbeispiels näher erläutert. Die beiden Figuren zeigen eine erfindungsgemäße, elektromechanische Bremse im Achsschnitt (Figur 1) und eine Kupplung der Bremse aus Figur 1 in perspektivischer Explosionsdarstellung (Figur 2).

### Beschreibung des Ausführungsbeispiels

Die in Figur 1 dargestellte, insgesamt mit 10 bezeichnete, erfindungsgemäße elektromechanische Radbremse ist als Scheibenbremse ausgebildet. Sie weist einen Bremssattel 12 auf, in dem zwei Reibbremsbeläge 14 einliegen, die beiderseits einer zwischen ihnen angeordneten und drehbaren Bremsscheibe 16 angeordnet sind. Der Bremssattel 12 ist als sog. Schwimmsattel ausgebildet, d. h. er ist quer zur Bremsscheibe 16 verschieblich, so dass durch Andrücken des in der Zeichnung rechts dargestellten, beweglichen Reibbremsbelags 14 an die Bremsscheibe 16 der Bremssattel 12 in der Zeichnung nach rechts verschoben wird und dadurch den in der Zeichnung links dargestellten, feststehenden Reibbremsbelag 14 gegen die andere Seite der Bremsscheibe 16 drückt. Das Andrücken der Reibbremsbeläge 14 an die Bremsscheibe 16 wird auch als Zuspannen oder Betätigen der Bremse 10 bezeichnet.

Zum Andrücken des in Figur 1 rechts dargestellten beweglichen Reibbremsbelags 14 an die Bremsscheibe 16 weist die Bremse 10 ein Rotations/Translations-Umsetzungsgetriebe auf, das im dargestellten und beschriebenen Ausführungsbeispiel der Erfindung als Kugelgewindetrieb 18, also als spezielle Form eines Spindeltriebs, ausgebildet ist. Der Kugelgewindetrieb 18 weist eine Hohlspindel 20, eine die Hohlspindel 20 konzentrisch umschließende Mutter 22 und Kugeln 24 auf, die in an sich bekannter Weise in gewindeförmig verlaufende Rillen der Hohlspindel 20 und der Mutter 22 einliegen und eine Schraubbewegung von der Hohlspindel 20 auf die Mutter 22 übertragen. Die Hohlspindel 20 ist mit einem Nadel-Axiallager 26 axial abgestützt. Durch rotierenden Antrieb der Hohlspindel 20 wird die Mutter 22 axial verschoben und drückt den beweglichen Reibbremsbelag 14 an die Bremsscheibe 16 an oder hebt den Reibbremsbelag 14 bei umgekehrter Drehrichtung der Hohlspindel 20 von der Bremsscheibe 16 ab.

Das Axiallager 26 stützt sich an einem rohrförmigen Halter 28 ab, der an seinem der Bremsscheibe 16 zugewandten Ende einen nach außen stehenden Bund 30 und an seinem der Bremsscheibe 16 fernen Ende einen nach innen stehenden Bund 32 aufweist. Mit seinem nach außen stehenden Bund 30 liegt der Halter 28 in einer Ringstufe des Bremssattels 12 ein und ist dadurch axial am Bremssattel 12 abgestützt. Das Axiallager 26 stützt sich an dem nach innen stehenden Bund 32 des Halters 28 ab, wobei zwischen dem Axiallager 26 und dem nach innen stehenden Bund 32 ein ringförmiger Kraftsensor 34 angeordnet ist. Mit dem Kraftsensor 34 ist eine Andruckkraft des Reibbremsbelags 14 an die Bremsscheibe 16 messbar. Die Mutter 22 des Kugelgewindetriebs 18 liegt verschiebbar in dem rohrförmigen Halter 28 ein. Der in dem Halter 18 einliegende Kugelgewindetrieb 18 bildet eine eigenständige, vormontierbare Baugruppe.

Der Kugelgewindetrieb 18 ist von einem Elektromotor 36 umschlossen, der als Hohlwellenmotor ausgebildet ist. Der Elektromotor 36 ist koaxial zum Kugelgewindetrieb 18 angeordnet. Der Elektromotor 36 weist ein rohrförmiges Motorgehäuse 38 auf, das an den Bremssattel 12 angeflanscht ist. Der Elektromotor 36 weist eine rohrförmige Hohlwelle 40 auf, die den Halter 28 und den Kugelgewindetrieb 18 koaxial umschließt. Die Hohlwelle 40 ist mit Kugellagern 42 drehbar im Motorgehäuse 38 gelagert. Der Elektromotor 36 ist ein elektronisch kommutierter Motor, dessen Stator im Motorgehäuse 38 feststehend angebrachte Wicklungen 44 mit Blechpaketen 46 aufweist. Der an den Bremssattel 12 angeflanschte Elektromotor 36 bildet eine eigenständige und separat prüfbare Baugruppe.

Zur Übertragung einer Rotationsbewegung von der Hohlwelle 40 des Elektromotors 36 auf die Hohlspindel 20 des Kugelgewindetriebs 18 weist die Bremse 10 ein Planetengetriebe 48 und eine elastische Ausgleichskupplung 50 auf. Das. Planetengetriebe 48 und die Kupplung 50 sind in einem napfförmigen Deckel 52 untergebracht, der an einer dem Bremssattel 12 abgewandten Seite auf das Motorgehäuse 38 aufgesetzt ist und dieses verschließt. Der Deckel 52 bildet ein Getriebe- und Kupplungsgehäuse. Auf diese Weise sind auch das Planetengetriebe 48 und die Kupplung 50 zu einer eigenständigen Baugruppe zusammengefasst.

Ein Sonnenrad 53 des Planetengetriebes 48 ist als Hohlrad ausgebildet, es weist einen verzahnungsfreien Axialabschnitt auf, mit dem es in einen nach innen stehenden Flansch der Hohlwelle 40 des Elektromotors 36 auf einer der Bremsscheibe 16 fernen Seite drehfest eingepresst ist. Mit dem Sonnenrad 53 kämen Planetenräder 54, die ihrerseits mit einem ein Hohlrad 56 des Planetengetriebes 48 bildenden Innenzahnring kämen. Das Hohlrad 56 ist drehfest in eine Ringstufe des Deckels 52 eingepresst.

Die in Figur 2 separat in Explosionsdarstellung gezeigte Kupplung 50 ist als Klauenkupplung ausgebildet. Sie weist zwei zueinander parallele und mit Abstand voneinander angeordnete, lochscheibenförmige Klauenringe 58, 60 auf, von deren einander zugewandten Stirnflächen Klauen 62, 64 abstehen, die zwischen einander greifen. Zwischen den beiden Klauenringen 58, 60 ist ein gummielastisches Dämpferelement 66 angeordnet, dessen Form und Aussehen an ein Zahnrad erinnert. Radial nach außen stehende Zähne 68 des Dämpferelements 66 liegen zwischen Flanken der Klauen 62, 64 der Klauenringe 58, 60 ein. Flanken der Zähne 68 des Dämpferelements 66 sind evolventenförmig, an den Flanken der Zähne 68 des Dämpferelements 66 anliegende Flanken der Klauen 62, 64 sind dazu komplementär geformt. Die Kupplung 50 ist eine elastische Ausgleichskupplung, die Drehmomentstöße verringert und Drehschwingungen dämpft und die Fluchtungsfehler (Winkelfehler, Radialversatz) und Axialverschiebungen ausgleicht. Durch die Anordnung des Kraftsensors 34 unmittelbar am Axiallager 26 des Kugelgewindetriebs 18 und den Ausgleich von Winkelfluchtungsfehlern mit der Kupplung 50 wird eine hohe Signalgüte des Kraftsensors 34 errecht.

Der in der Zeichnung links dargestellte Klauenring 58 ist mit einem Kugellager 70 in einer Ringstufe des Deckels 52 drehbar gelagert. Ein Innenring des Kugellagers 70 ist auf den Klauenring 58 auf- und ein Außenring des Kugellagers 70 in die Ringstufe des Deckels 52 eingepresst.

Der in der Zeichnung links dargestellte Klauenring 58 der Kupplung 50 bildet einen Planetenträger für die Planetenräder 54 des Planetengetriebes 48: Im Klauenring 58 sind vier Löcher angebracht, in die einen Kopf aufweisende Zylinderstifte 72 eingepresst sind, auf denen die Planetenräder 54 drehbar gelagert sind.

Über ein Vielzahnprofil 74 ist eine Hohlwelle 76 drehfest in den in der. Zeichnung rechten Klauenring 60 eingesetzt und mit einer Schraube 78 gesichert. Die Hohlwelle 76 durchgreift das Dämpferelement 66, den anderen Klauenring 58, das Sonnenrad 53 und den Kraftsensor 34 berührungslos, die Hohlwelle 76 ist gegenüber diesen Teilen frei drehbar. Ein der Kupplung 50 fernes Ende der Hohlwelle 76 ist drehfest in die Hohlspindel 20 des Kugelgewindetriebs 18 eingepresst und durch einen Bördel 80 gesichert.

Zum Zuspannen der Bremse 10 wird deren Elektromotor 36 bestromt und dadurch seine Hohlwelle 40 rotierend angetrieben. Das mit der Hohlwelle 40 drehfeste Sonnenrad 53 des Planetengetriebes 48 rotiert mit der Hohlwelle 40 mit und treibt die Planetenräder 54 in an sich bekannter Weise zu einer Umlaufbewegung an. Über die Zylinderstifte 72 versetzen die Planetenräder 54 den in der Zeichnung links dargestellten, den Planetenträger bildende Klauenring 58 in Rotation. Über das Dämpferelement 66 wird die Rotationsbewegung auf den anderen Klauenring 60 übertragen, der über die Hohlwelle 76, die über das Vielzahnprofil 74 mit ihr drehfest ist, die Hohlspindel 20 des Kugelgewindetriebs 18 in Rotation versetzt. Die Rotation der Hohlspindel 20 bewirkt eine Axialverschiebung der Mutter 22, die den beweglichen Reibbremsbelag 14 an die Bremsscheibe 16 drückt. Zum Lösen wird der Elektromotor 36 im Sinne einer umgekehrten Drehrichtung bestromt.

Zum Abnehmen der das Planetengetriebe 48 und die Kupplung 50 umfassenden Baugruppe wird die Schraube 78, die die Hohlwelle 76 im Klauenring 60 sichert, entfernt, wonach die Klauenkupplung 50 von der Hohlwelle 76 abgezogen und folglich der das Getriebe- und Kupplungsgehäuse bildende Deckel 52 mit dem in ihm einliegenden Planetengetriebe 48 und der Kupplung 50 abgenommen werden kann.

## Patentansprüche

1. Elektromechanische Bremse (10), mit einem Elektromotor (36), mit einem Rotations/Translations-Umsetzungsgetriebe (18), das mit dem Elektromotor (36) rotierend antreibbar ist und das eine Rotationsbewegung des Elektromotors (36) in eine Translationsbewegung umsetzt, und mit einem Reibbremsbelag, (14) der mit dem Rotations/Translations-Umsetzungsgetriebe (18) an einen drehbaren Bremskörper (16) andrückbar ist und bei der die Bremse (10) eine nicht schaltbare ausgleichende Kupplung (50) aufweist, die dem Elektromotor (36) und dem Rotations/Translations-Umsetzungsgetriebe (18) zwischengeschaltet ist und die eine Rotationsbewegung des Elektromotors (36) auf das Rotations/Translations-Umsetzungsgetriebe (18) überträgt und bei der die Bremse (10) als Untersetzungsgetriebe ein Planetengetriebe (48) aufweist, das dem Elektromotor (36) und der Kupplung (50) zwischengeschaltet ist,
**dadurch gekennzeichnet,**
**dass** die Kupplung als elastische Klauenkupplung (50) ausgebildet ist und mit dem Planetengetriebe (48) eine eigenständige Baugruppe bildet, die in einem Gehäusedeckel (52) untergebracht ist.

2. Elektromechanische Bremse nach Anspruch 1,
**dadurch gekennzeichnet, dass** die Klauenkupplung (50) einen Klauenring
(58) aufweist, der zugleich als Planetenträger des Planetengetriebes (48) ausgebildet ist.

3. Elektromechanische Bremse nach Anspruch 1,
**dadurch gekennzeichnet, dass** der als Planetenradträger dienende
Klauenring (58) im Gehäusedeckel. (52) drehbar gelagert ist

4. Elektromechanische Bremse nach einem der Ansprüche 1 bis 3,
**dadurch gekennzeichnet, dass** das Rotations/Translations-Umsetzungsgetriebe (18) einen Spindeltrieb aufweist.

5. Elektromechanische Bremse nach Anspruch 4,
**dadurch gekennzeichnet, dass** der Spindeltrieb als Kugelgewindetrieb (18) ausgebildet ist.

6. Elektromechanische Bremse nach einem der Ansprüche 1 bis 5,
**dadurch gekennzeichnet, dass** der Elektromotor (36) eine eigenständige Baugruppe bildet.

7. Elektromechanische Bremse nach einem der Ansprüche 1 bis 7,
**dadurch gekennzeichnet, dass** das Rotations/Translations-Umsetzungsgetriebe (18) eine eigenständige Baugruppe bildet.

8. Elektromechanische Bremse nach einem der Ansprüche 1 bis 7,
**dadurch gekennzeichnet, dass** im Rotations/Translations-Umsetzungsgetriebe (18) ein Kraftsensor (34) angeordnet ist.

## Claims

1. Electromechanical brake (10), having an electric motor (36), having a rotational/translatory change-speed gear mechanism (18) which can be driven in rotation with the electric motor (36) and which converts a rotational movement of the electric motor (36) into a translatory movement, and having a friction brake lining (14) which can be pressed with the rotational/translatory change-speed gear mechanism (18) against a rotatable brake element (16), and wherein the brake (10) has a non-shiftable compensating clutch (50) which is intermediately connected between the electric motor (36) and the rotational/translatory change-speed gear mechanism (18) and which transmits a rotational movement of the electric motor (36) to the rotational/translatory change-speed gear mechanism (18), and wherein the brake (10) has as step-down gear mechanism a planetary gear mechanism (48) which is intermediately connected between the electric motor (36) and the clutch (50), **characterized in that** the clutch is embodied as an elastic claw clutch (50), and with the planetary gear mechanism (48) it forms an independent assembly which is accommodated in a housing lid (52).

2. Electromechanical brake according to Claim 1, **characterized in that** the claw clutch (50) has a claw ring (58) which is embodied at the same time as planetary carrier of the planetary gear mechanism (48).

3. Electromechanical brake according to Claim 1, **characterized in that** the claw ring (58) which serves as planetary gear carrier is rotatably mounted in the housing lid (52).

4. Electromechanical brake according to one of Claims 1 to 3, **characterized in that** the rotational/translatory change-speed gear mechanism (18) has a spindle drive.

5. Electromechanical brake according to Claim 4, **characterized in that** the spindle drive is embodied as a ball screw (18).

6. Electromechanical brake according to one of Claims 1 to 5, **characterized in that** the electric motor (36) forms an independent assembly.

7. Electromechanical brake according to one of Claims 1 to 7, **characterized in that** the rotational/translatory change-speed gear mechanism (18) forms an independent assembly.

8. Electromechanical brake according to one of Claims 1 to 7, **characterized in that** a force sensor (34) is arranged in the rotational/translatory change-speed gear mechanism (18).

## Revendications

1. Frein électromécanique (10) comportant un moteur électrique (36), une transmission de conversion rotation/translation (18) entraînée en rotation par le moteur électrique (36) et convertissant le mouvement de rotation du moteur électrique (36) en un mouvement de translation ainsi qu'une garniture de friction (14) qui est poussée par la transmission de conversion rotation/ translation (18) contre un organe de frein (16) en rotation, et selon lequel, le frein (10) comporte un embrayage (50) de compensation non commutable, interposé entre le moteur électrique (36) et la transmission de conversion rotation/translation (18) et qui transmet le mouvement de rotation du moteur électrique (36) à la transmission de conversion rotation/translation (18) et selon lequel le frein (10) comporte une transmission réductrice comme transmission planétaire (48) entre le moteur électrique (36) et l'embrayage (50),
**caractérisé en ce que**
l'embrayage est un embrayage à griffes (50), élastique et forme un ensemble indépendant avec la transmission planétaire (48), cet ensemble étant logé dans un couvercle de boîtier (52).

2. Frein électromagnétique selon la revendication 1,
**caractérisé en ce que**
l'embrayage à griffes (50) comporte une bague à griffes (58) constituant en même temps le support planétaire de la transmission planétaire (48).

3. Frein électromagnétique selon la revendication 1,
**caractérisé en ce que**
l'anneau à griffes (58) servant de support planétaire est monté à rotation dans le couvercle (52) du boîtier.

4. Frein électromagnétique selon l'une des revendications 1 à 3,
**caractérisé en ce que**
la transmission de conversion rotation/translation (18) comporte une transmission à broche.

5. Frein électromagnétique selon la revendication 4,
**caractérisé en ce que**
la transmission à broche est une transmission à vis à billes (18).

6. Frein électromagnétique selon l'une des revendications 1 à 5,
**caractérisé en ce que**
le moteur électrique (36) constitue un ensemble indépendant.

7. Frein électromagnétique selon l'une des revendications 1 à 6,
**caractérisé en ce que**
la transmission de conversion rotation/translation (18) constitue un ensemble indépendant.

8. Frein électromagnétique selon l'une des revendications 1 à 7,
**caractérisé en ce que**
la transmission de conversion rotation/translation (18) comporte un capteur de force (34).
